# EUROPEAN PATENT APPLICATION

(11) **EP 4 592 200 A1**
(43) Date of publication of application: **30.07.2025**
(21) Application number: 24382065.1
(22) Date of filing: 25.01.2024
(51) Int. Cl.: B64F 5/40

(54) **SYSTEM AND METHOD FOR REPAIRING AIRCRAFT STRUCTURES**

(71) Applicant: AIRBUS OPERATIONS, S.L.U., 28906 Getafe (Madrid) (ES)
(72) Inventor: GARCIA SERRANO, Julián, 28906 GETAFE (Madrid) (ES)
(74) Representative: Herrero & Asociados, S.L.

(57) **Abstract**

The system for repairing aircraft structures comprises a frame (2) that is divided into two portions, and in that the system also comprises one or more straps (3) that attach both portions of the frame (2) to each other.

The method comprises the steps of making a cutout in the skin (1) of the structure to be repaired; dividing the frame (2) into two portions; placing the two portions of the frame (2) on the internal side of the skin (1) through said cutout; and attaching the two portions of the frame (2) to each other by one or more straps (3).

They permit the installation of an internal frame in a structure of an aircraft without internal access.

## Description

The present invention relates to a system and method for repairing aircraft structures, which allows the installation of an internal frame in a structure of an aircraft without internal access.

### Background of the invention

Aircraft structures are subjected to various external factors such as environmental conditions, operational stresses, and unforeseen events, resulting in the need for periodic maintenance and repair.

Conventional repair methods often involve the application of patches to reinforce or replace damaged sections of the aircraft structure. While these patches effectively restore structural integrity, they unfortunately introduce aerodynamic penalties that can significantly impact the overall performance of the aircraft.

Aircraft designers and operators strive to optimize aerodynamic efficiency to enhance fuel economy, speed, and overall flight performance. The introduction of external patches, however, disrupts the smooth airflow over the aircraft's surface, leading to increased drag, reduced lift, and altered aerodynamic characteristics.

These penalties not only compromise the aircraft's operational efficiency but also pose challenges in meeting stringent regulatory requirements related to fuel efficiency and emissions.

This problem is even greater in structures of an aircraft without internal access.

The need for structural repair must be balanced with the imperative to maintain or even enhance the aerodynamic characteristics of the aircraft. Therefore, there exists a need for a system a method that can effectively repair structural damage while minimizing the associated aerodynamic penalties.

### Description of the invention

Therefore, an objective of the present invention is to provide a system and method for repairing aircraft structures, which allows the installation of an internal frame in a structure of an aircraft without internal access.

The system and method of the invention solve the above-mentioned disadvantages and has other advantages which will be described below.

The system and method for repairing aircraft structures according to the present invention are described in the independent claims, and the dependent claims include additional features that are optional.

In particular, the system for repairing aircraft structures comprises a frame that is divided into two portions, and one or more straps that attach both portions of the frame to each other.

This divided frame permits to place the frame in an internal side of the part or skin of the structured to be repaired, so that the placement of the frame does not affect the aerodynamic features of the aircraft structure.

Furthermore, the strap(s) provides continuity to the frame.

According to a preferred embodiment, each portion of the frame is U-shaped.

Furthermore, the system preferably comprises two straps that attach two opposed ends of the U-shaped portions of the frame.

The system can also comprise a skin insert that is attached to the frame and to the one or more straps, and the skin insert is placed in the skin cutout.

Furthermore, the attaching of these repair parts is made with 2 or 3 rows of blind fasteners.

According to a second aspect, the method for repairing aircraft structures comprises the following steps:
- cutout the skin of the structure to be repaired;
- dividing a frame into two portions;
- placing the two portions of the frame on the internal side of the skin through said cutout; and
- attaching the two portions of the frame to each other by one or more straps.

The method can also comprise placing a skin insert in the skin cutout and attaching the skin insert to the frames and one or more straps.

Preferably, the attaching of these repair parts is made with 2 or 3 rows of blind fasteners.

### Brief description of the drawings

For a better understanding of what has been explained above, some drawings are included in which, schematically and only by way of a non-limiting example, a practical case of embodiment is represented.
Figure 1 is a plan inner view of a portion of an aircraft structure in which the system according to the present invention has been applied;
Figure 2 is a section view along line II-II of Figure 1; and
Figure 3 is a section view along line III-III of Figure 1.

### Description of a preferred embodiment

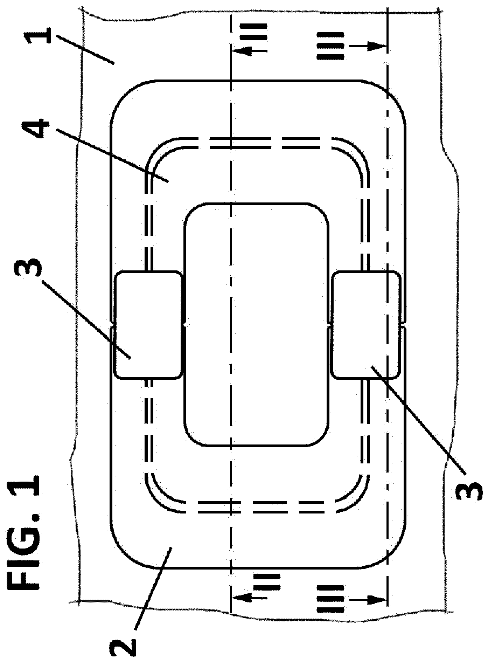

Figure 1 shows a preferred embodiment of the repair system according to the present invention, that covers a portion to be repaired of a skin 1 of an aircraft structure, said skin 1 defining an internal side and an external side.

The system comprises a frame 2 that is divided into two portions adapted to the contours of the damaged area. The system further comprises one or more straps 3 designed to attach both portions of the frame 2 securely, ensuring a robust structural connection.

According to the shown embodiment, each portion of the frame 2 assumes a U-shaped configuration, providing an optimized geometry for effective repair applications. Additionally, to enhance the structural integrity and stability of the repair, two straps 3 are used to attach the opposed ends of the U-shaped portions.

The repair system also comprises preferably a skin insert 4 that is attached to the frames 2 and to the one or more straps 3. This skin insert 4 is positioned in the skin cutout to contribute additional support and reinforcement.

The connection between the frame 2, the skin insert 4, and the straps 3 is preferably made by blind fasteners 5, e.g., countersunk blind fasteners. These blind fasteners 5 securely and efficiently attach the components together, ensuring a durable repair.

In a preferred arrangement, the blind fasteners 5 are organized in rows, further enhancing the structural stability and uniformity of the repair.

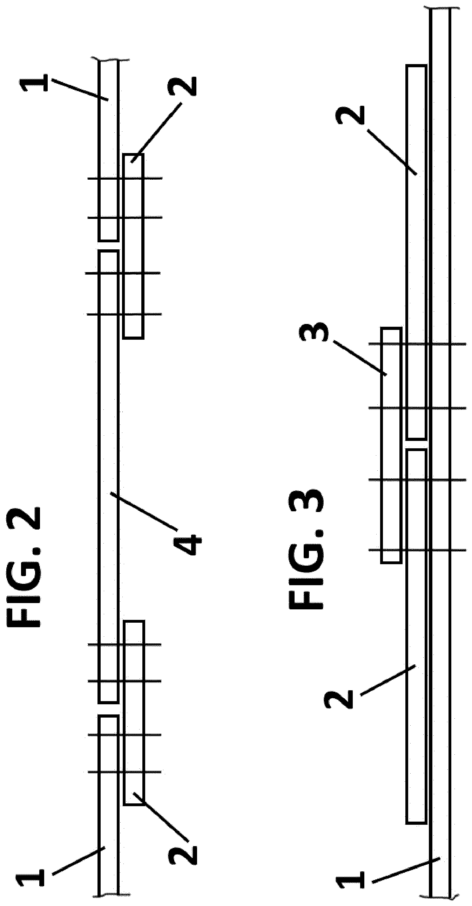

As shown in Figure 2, the frame 2 is placed internally with respect to the skin 1, and the skin insert 4 is placed aligned with respect to the skin 1.

Furthermore, as shown in Figure 3, the straps 3 are placed internally with respect to both the frame 2 and the skin 1.

For placing the repairing system in place in the aircraft structure, firstly a cutout is done in the external side of the skin 1.

Subsequently, both portions of the frame 2 are introduced through the cutout onto the internal side of the skin 1. The two portions of the frame 2 are then securely attached to each other by the one or more straps 3.

In the event that additional reinforcement is desired, a skin insert 4 is placed in the skin cutout and the skin insert 4 is attached to the frame and the one or more straps 3.

## Claims

1. System for repairing aircraft structures, comprising a frame (2), **characterized in that** the frame (2) is divided into two portions, and **in that** the system also comprises one or more straps (3) that attach both portions of the frame (2) to each other.

2. System for repairing aircraft structures according to claim 1, wherein each portion of the frame (2) is U-shaped.

3. System for repairing aircraft structures according to claim 2, wherein the system comprises two straps (3) that attach two opposed ends of the U-shaped portions of the frame (2).

4. System for repairing aircraft structures according to anyone of the previous claims, wherein the system also comprises a skin insert (4) that is attached to the frame (2) and one or more straps (3).

5. System for repairing aircraft structures according to anyone of the previous claims, wherein the skin insert (4) is placed in the skin cutout.

6. System for repairing aircraft structures according to anyone of the previous claims, wherein the frame (2) and/or the skin insert (4) is attached to the one or more straps (3) by blind fasteners (5).

7. System for repairing aircraft structures according to claim 6, wherein the blind fasteners (5) are placed in rows.

8. Method for repairing aircraft structures, wherein the structure to be repaired comprises a skin (1) defining an internal side and an external side, **characterized in that** the method comprises the following steps:
- making a cutout in the skin (1) of the structure to be repaired;
- dividing a frame (2) into two portions;
- placing the two portions of the frame (2) on the internal side of the skin (1) through said cutout; and
- attaching the two portions of the frame (2) to each other by one or more straps (3).

9. Method for repairing aircraft structures according to claim 8, wherein the method also comprises placing a skin insert (4) in the skin cutout and attaching the skin insert (4) to the frame (2) and one or more straps (3).

10. Method for repairing aircraft structures according to claim 8 or, wherein the attaching of the two portions of the frame (2) and/or the skin insert (4) to the one or more straps (3) is made placing in rows a plurality of blind fasteners (5).
